Europäisches Patentamt

European Patent Office

Office européen des brevets

(19)

(11) Numéro de publication: **0 146 432**
**B1**

(12) **FASCICULE DE BREVET EUROPEEN**

(45) Date de publication du fascicule du brevet: **12.09.90**

(51) Int. Cl.⁵: **G 01 S 15/60, B 60 T 8/00**

(21) Numéro de dépôt: **84402234.3**

(22) Date de dépôt: **07.11.84**

(54) **Procédé et dispositif de mesure par ultrasons de la vitesse d'avancement d'un véhicule par rapport au sol.**

(30) Priorité: **08.11.83 FR 8317731**

(43) Date de publication de la demande:
**26.06.85 Bulletin 85/26**

(45) Mention de la délivrance du brevet:
**12.09.90 Bulletin 90/37**

(84) Etats contractants désignés:
**DE GB IT NL**

(56) Documents cités:
**DE-A-3 017 480**
**FR-A-1 273 530**
**FR-A-2 332 539**
**FR-A-2 354 565**
**FR-A-2 437 325**
**GB-A-1 059 129**
**US-A-3 915 508**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Drutel, Yves**
**30, Allée de la Forêt**
**F-92360 Meudon La Foret (FR)**
Inventeur: **Joyez, Gérard**
**11, rue Boisset**
**F-77166 Grisy Suisnes (FR)**
Inventeur: **Thevenin, André E.S.E.R.D.Ecole Nat.Supérieure**
**d'Electron.et de Radio-Elec.de Bordeaux 351 Crs de la Libération F33405 Talence Cedex (FR)**
Inventeur: **Huddlestone, Georges**
**92, rue des Mazurières**
**F-92500 Rueil Malmaison (FR)**

Courier Press, Leamington Spa, England.

## Description

La présente invention se rapporte à un procédé de mesure de la vitesse d'un véhicule par ultrasons et son application à la mesure du patinage des roues d'un tel véhicule, ainsi qu'à un dispositif pour la mise en oeuvre de ce procédé.

La vitesse d'avancement d'un véhicule peut se déduire de celle des roues de ce véhicule lorsqu'il y a roulement sans glissement, mais tel n'est plus le cas en présence d'un patinage des roues. On rencontre notamment ce problème sur les tracteurs agricoles dont il faut connaître la vitesse d'avancement par rapport au sol, soit pour assurer un épandage précis d'une quantité de matière par unité de surface, soit pour en déduire le taux de patinage des roues afin d'optimiser la vitesse du tracteur et/ou la profondeur de labour.

On connaît par les brevets FR—A—2354565, FR—A—1273530 DE—A—3017.480 mesure par ultra sons de la vitesse d'avancement d'un véhicule par rapport au sol comprenant un émetteur et un récepteur de signaux ultra sons ainsi qu'un circuit de traitement de ces signaux produisant un signal Doppler représentatif de ladite vitesse. Ces dispositifs n'assurent pas un traitement numérique de signal mais un traitement analogique. L'information ainsi obtenue sur la vitesse du véhicule n'est pas réellement fiable car le signal Doppler est fortement affecté par les variations de la célérité du son en fonction de la température de l'air et des coefficients de réflexion et de diffusion du sol deux aux irrégularités et modifications de la nature du terrain rencontré. Le brevet DE—A—3017480 heut compte de la température.

Le brevet FR—A—2332539 a pour but d'éliminer les periodes anormales.

Le brevet FR—A—2437325 decrit un montage du dispositif de reseau sur le vehicule.

La présente invention vise à fournir un procédé de mesure par ultrasons de la vitesse d'avancement d'un véhicule par rapport au sol qui permette de s'affranchir des erreurs systématiques et aléatoires.

A cet effet, l'invention a pour objet un procédé de de mesure par effet Doppler de la vitesse d'avancement d'un véhicule par rapport au sol suivant lequel on émet du véhicule vers le sol un signal sinusoïdal ultrasonore, on détecte le signal réfléchi du sol vers le véhicule, on engendre un signal produit obtenu par la multiplication du signal électrique utilisé pour engendrer ledit signal ultrasonore et du signal détecté et on filtre ledit signal produit pour en extraire la fréquence fondamentale constituant un signal Doppler représentatif de la vitesse d'avancement du véhicule par rapport au sol, caractérisé en ce qu'on effectue en outre successivement un filtrage médian en éliminant les deux valeurs extrêmes d'une série de trois valeurs de la période du signal Doppler prises consécutivement dans le temps, et une moyenne exponentielle par un filtrage numérique du premier ordre de la forme:

$$T_{n+1} = \frac{t_{n+1}}{K} + (1 - \frac{1}{K})T_n$$

où

—$T_{n+1}$ est la nouvelle période calculée du signal Doppler,

—$t_{n+1}$ est la période du signal Doppler issu du filtrage médian,

—$T_n$ est la période du signal Doppler calculée précédemment,

—K est une constante de temps de filtrage.

Selon une caractéristique du procédé on effectue en outre sur le signal Doppler filtré une correction en fonction de la température de l'air ambiant.

L'invention concerne egalement un dispositif pour la mise en oeuvre du procédé comprenant, à bord du véhicule, un générateur (163) de signal ultrasonore connecté à des moyens (6, 4) d'émission d'un signal sinusoïdal ultrasonore vers le sol, des moyens de réception (5) et d'amplification (7) du signal réfléchi du sol vers le véhicule, des moyens de détection (3) engendrant un signal produit obtenu par la multiplication du signal appliqué auxdits moyens d'émission et du signal détecté et des moyens de filtrage (8) pour extraire le signal Doppler dudit signal produit, caractérisé en ce qu'il comprend en outre un capteur de température de l'air ambiant (11) et un circuit logique de traitement (1) comportant un microprocesseur (13) assurant:

1) le filtrage médian en éliminant les deux valeurs extrêmes d'une série de trois valeurs de la période du signal Doppler prises consécutivement dans le temps,

2) le calcul d'une moyenne exponentielle par un filtrage numérique du premier ordre de la forme:

$$T_{n+1} = \frac{t_{n+1}}{K} + (1 - \frac{1}{K})T_n$$

où

—$T_{n+1}$ est la nouvelle période calculée du signal Doppler,

—$t_{n+1}$ est la période du signal Doppler issu du filtrage médian,

—$T_n$ est la période du signal Doppler calculée précédemment,

—K est une constante de temps de filtrage, et

3) la correction en température du signal Doppler en fonction du signal de sortie du capteur de température.

D'autres caractéristiques et avantages de l'invention ressortiront de la description qui va suivre d'un exemple de sa réalisation donnée uniquement à titre d'exemple et illustré par les dessins annexés sur lesquels:

la figure 1 est un schéma bloc général d'un dispositif de mesure de vitesse et du patinage des roues d'un véhicule suivant l'invention;

la figure 2 est un schéma bloc du circuit logique de traitement des données du dispositif représenté à la figure 1;

la figure 3 est un organigramme du programme principal de fonctionnement du circuit de la figure 2; et

la figure 4 est un organigramme d'un programme d'interruption associé au programme principal de la figure 3.

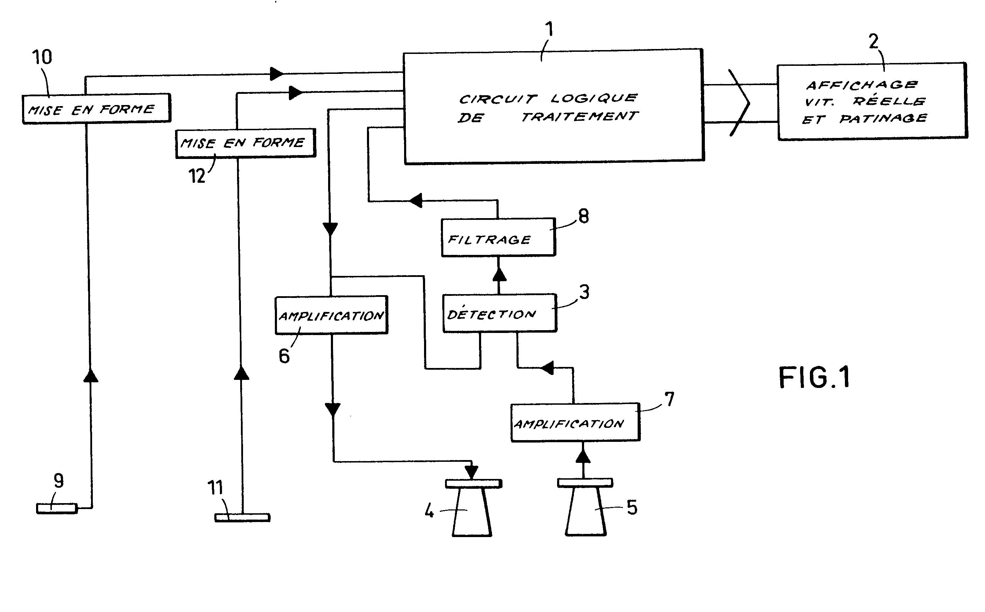

En se reportant à la figure 1, le dispositif de mesure de la vitesse et du patinage des roues d'un véhicule comprend un circuit logique de traitement 1 connecté d'une part à un module d'affichage 2 et d'autre part à un certain nombre de transducteurs lui fournissant des informations relatives à la vitesse des roues du véhicule, à la température de l'air ambiant et à la vitesse du véhicule par rapport au sol sous forme d'un signal Doppler.

Le signal Doppler est obtenu par multiplication dans un circuit de détection 3 des signaux de fréquence ultrasonique émis vers le sol par un émetteur 4 et reçu après réflexion par un récepteur 5. L'émetteur 4 est alimenté à partir d'un oscillateur du circuit de traitement 1 dont le signal est amplifié par un amplificateur 6 tandis que le signal de sortie du récepteur 5 est amplifié par un amplificateur 7 avant application au circuit de détection 3, qui reçoit par ailleurs également le signal émis par l'oscillateur. Le signal Doppler généré par le circuit de détection 3 est appliqué au circuit logique de traitement 1 après filtrage en 8.

Le circuit de détection 3 est de préférence constitué par un multiplieur analogique XR 2208 précédé d'un écrêteur à diodes Zener permettant de s'affranchir des nombreuses variations d'amplitude que subit le signal ultrasonore reçu et d'attaquer le multiplieur analogique avec des signaux d'amplitude constante pour le faire fonctionner en détecteur de phase. Le circuit de détection 3 produit donc un signal contenant le signal Doppler et des harmoniques de la porteuse, puisque le multiplieur a effectué le produit de deux fonctions sinusoïdales légèrement décalées en fréquence.

Le circuit 8 est un filtre passe-band dont la bande passante est choisie de façon à ne pas altérer le signal Doppler tout en assurant une bonne réjection de la porteuse et des très basses fréquences qui pouraient apparaître par suite de vibrations mécaniques.

L'information relative à la vitesse des roues est fournie au circuit 1 par un capteur 9 disposé, par exemple, en sortie de la boîte de vitesses du véhicule et dont le signal de sortie est mis en forme en 10.

Enfin, l'information relative à la température de l'air ambiant est fournie au circuit 1 par une thermistance ou autre capteur de température approprié 11 et un circuit de mise en forme 12.

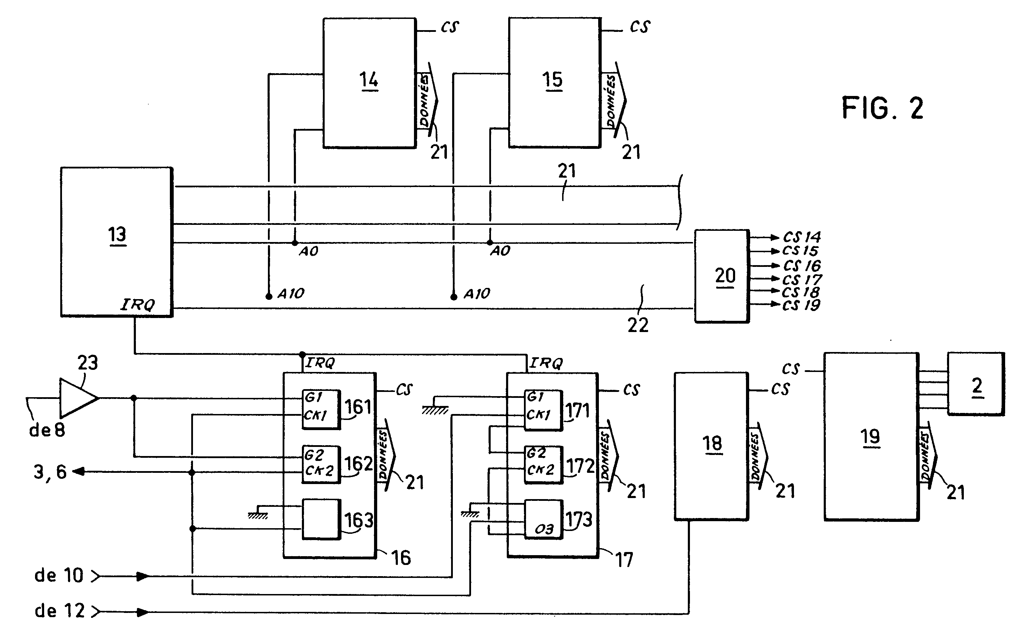

Le circuit logique de traitement 1 est représenté plus en détail à la figure 2 et comprend un microprocesseur 13, une mémoire morte 14 contenant le programme de fonctionnement du microprocesseur 13, une mémoire vive 15 pour le stockage de résultats intermédiaires, deux circuits de temporisation 16 et 17 assurant la mesure de la vitesse des roues et d'avancement par rapport au sol du véhicule, un convertisseur analogiquenumérique 18 pour la lecture de la température provenant du capteur 11, un port de sortie 19 qui pilote le module d'affichage 2 et un décodeur 20 qui assure la validation des circuits 14, 15, 16, 17, 18 et 19 par leur entrée CS. Le microprocesseur 13 est connecté par un bus de données 21 aux circuits 14, 15, 16, 17, 18 et 19 et par un bus d'adresses 22 aux mémoires 14 et 15 et au décodeur 20.

A titre d'exemple, on peut utiliser pour les différents circuits de la figure 2 les composants suivants:

—microprocesseur 13:CPU 6809
—mémoire morte 14:EPROM 2716
—mémoire vive 15:RAM 2016
—circuits de temporisation 16 et 17: "timers" 6840
—convertisseur analogique/numérique: ADC 804
—porte de sortie:PIA 6821

Les circuits de temporisation 16 et 17 sont de type programmable et interrompent le fonctionnement du microprocessur 13 par son entrée IRQ pour lui permettre d'aller lire leur contenu et de traiter cette information.

Le circuit de temporisation 16 comporte trois compteurs 161, 162 et 163 programmés respectivement en monostable, en comparateur de fréquence et en oscillateur. Le compteur 163 génère une fréquence de, par exemple 36 kHz, qui est appliqué à l'amplificateur 6, au circuit de détection 3, ainsi qu'aux entrées d'horloge CK1 et CK2 des compteurs 161 et 162 respectivement.

Le signal Doppler en provenance du filtre 8 est appliqué, par l'intermédiaire d'une bascule de Schmitt 23 assurant une dernière mise en forme, aux entrées "gate" G1 et G2 des compteurs 161 et 162 respectivement.

Le compteur 162 génère une interruption IRQ à chaque front descendant sur son entrée G2, ce qui provoque la lecture de son contenu. La valeur lue est alors représentative de la période du signal Doppler:ce compteur 162 assure donc une mesure de période.

La lecture de la période s'effectuant à chaque interruption IRQ, c'est la dernière valeur lue qui resterait en principe affichée en cas de cessation du signal Doppler. Pour pallier cet inconvénient, le compteur 161 programmé en monostable est réinitialisé à chaque front descendant sur son entrée G1:il envoie ainsi une interruption IRQ qui provoque la remise à zéro de l'affichage à chaque fois que la fréquence Doppler reste inférieure à une valeur donnée, par exemple 1 Hz.

Le circuit de temporisation 17 comporte également trois compteurs 171, 172 et 173 qui sont utilisés pour la mesure du patinage.

Le patinage des roues du véhicule est exprimé par la relation:

$$\text{Patinage} = 100 \frac{Vr - Vd}{Vr}$$

dans laquelle:

—Vr est la vitesse périphérique des roues du véhicule;

—Vd est la vitesse d'avancement du véhicule par rapport au sol mesurée par effet Doppler.

Or, $Vd = Kd \cdot fd$ et
$Vr = Kr \cdot fr$,

Kd et Kr étant des constantes et fd et fr les fréquences des signaux Doppler et de vitesse roues respectivement.

On a donc:

$$\text{Patinage} = 100 - 100 \frac{Kd\ fd}{Kr\ fr}$$

Le rapport Kd/Kr étant égal à une constante, on constate que le patinage ne dépend que du rapport fd/fr. C'est ainsi que dans le présent exemple de réalisation on a:

fd = 1,5 KHz à 36 km/h d'où Kd fd = 36
fr = 1,5 KHz à 25 km/h d'où Kr fr = 25
soit: Kd/Kr = 1,4
On en déduit:

$$\text{Patinage} = 100 - \frac{fd}{\underset{140}{fr}} = 100 - \frac{2fd}{\underset{35}{fr/2}} \qquad (1)$$

Le circuit de temporisation 17 permet de mesurer le patinage par application de l'expression (1), étant entendu que les valeurs numériques données ci-dessus ne doivent être considérées que comme un exemple nullement limitatif de la portée de l'invention. A cet effet, le microprocesseur 13, qui a lu la période Doppler mesurée par le circuit de temporisation 16, commande le compteur 173 pour qu'il génère une fréquence 2fd égale à la fréquence Doppler multipliée par deux et filtrée.

Le compteur 171 reçoit à son entrée d'horloge CK1 le signal fr de vitesse des roues en provenance du capteur 9 et le divise par 35. Le signal fr/35 ainsi obtenu est appliqué par le compteur 171 à l'entrée "gate" G2 du compteur 172 qui reçoit sur son entrée d'horloge CK2 le signal 2fd de fréquence double du signal Doppler. A chaque front descendant de ce signal, le compteur 172, qui est programmé en comparateur de fréquence, envoie au microprocesseur 13 une interruption IRQ qui provoque la lecture de son contenu dont la valeur est égale à:

$$PAT = \frac{\underset{35}{2fd}}{fr/2} = 100 \frac{Vd}{Vr}$$

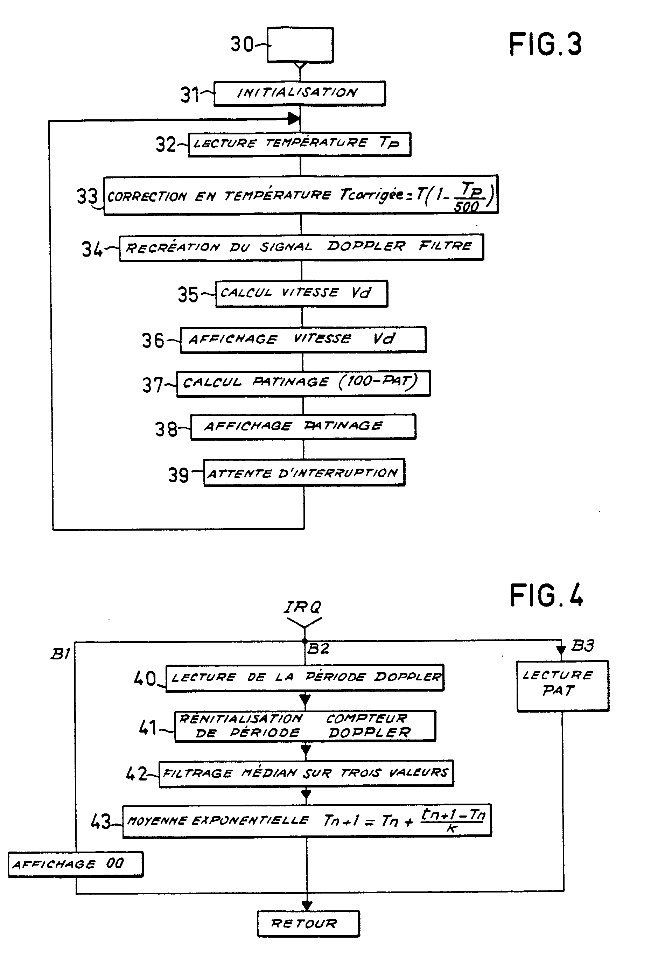

Le microprocesseur 13 calcule et commande l'affichage de la valeur du patinage (Patinage = 100 − PAT) ainsi que de la vitesse du véhicule par rapport au sol suivant le programme principal et le programme d'interruption des figures 3 et 4 qui seront maintenant décrits.

En se reportant à la figure 3, le démarrage du programme principal (étape 30) est suivi d'une étape 31 d'initialisation des registres, mémoires vives, variables, ports, etc, d'une étape 32 de lecture de température, d'une étape 33 de correction en température, d'une étape 34 de recréation du signal Doppler filtré, d'une étape 35 de calcul de la vitesse Vd d'avancement du véhicule, d'une étape 36 d'affichage de la vitesse Vd d'avancement du véhicule, d'une étape 37 de calcul du patinage, d'une étape 38 d'affichage de la valeur du patinage et d'une étape 39 d'attente d'interruption.

A la première passe du programme principal, la période Doppler T et le patinage ont bien étendu une valeur nulle en raison de l'initialisation opérée à l'étape 31.

A l'étape 39, le programme principale est en attente d'interruption pour passer au programme d'interruption illustré par la figure 4. Le programme d'interruption se sépare en trois branches:

on passe dans la branche B1, lorsque l'interruption IRQ vient du monostable 161, pour la remise à zéro de l'affichage;

on passe dans la branche B2 lorsque l'interruption IRQ vient du compteur 162: le microprocesseur lit alors la période Doppler T présente dans le compteur 162 et effectue un filtrage qui sera décrit ci-après;

on passe dans la branche B3 lorsque l'interruption IRQ provient du circuit de temporisation 17: il y a alors lecture du contenu du compteur 172, à savoir

$$PAT = 100 \frac{Vd}{Vr}$$

On supposera maintenant que l'on passe de l'étape 39 du programme principal à la branche B2 du programme d'interruption qui constitue une phase importante de la mise en oeuvre du procédé suivant l'invention. Cette branche assure en effet le traitement du signal Doppler qui, au sortir du filtre passe-bande 8, n'est pas exploitable directement pour les raisons évoquées précédemment.

En effet, pour une vitesse d'avance stabilisée, le signal Doppler présente une modulation d'amplitude qui occasionne la perte du signal pendant un certain temps. Bien que le signal soit mis en forme, il est nécessaire de fixer un seuil de détection, afin de ne pas être sensible aux vibrations du véhicule. Le dispositif de mesure doit donc être capable de rejeter les informations erronées rencontrées par la mesure de période.

Par ailleurs, la fréquence recueillie n'étant pas fixe elle non plus, il est nécessaire de filtrer la mesure de période Doppler effectuée. La répartition de cette frequence dépend directement du diagramme de rayonnement de la cellule ultrasonore dont l'angle d'ouverture des cornets de directivité doit être choisi de manière appropriée.

La modulation de fréquence ainsi que la modulation d'amplitude du signal Doppler font donc que le mesure de période effectuée doit passer par un certain nombre de filtres.

La perte d'implusions due à la modulation d'amplitude se traduit par une augmentation brutale de la période mesurée. Le pic correspondant ne se traduit généralement que par une seule valeur erronée qu'il convient de supprimer.

C'est ainsi que, après la lecture de la période Doppler dans le compteur 162 (étape 40) et la réinitialisation de ce dernier (étape 41), on opère à l'étape 42 un filtrage médian sur trois valeurs qui se traduit par l'élimination des deux valeurs extrêmes d'une série de trois valeurs prises consécutivement dans le temps.

La modulation de fréquence se traduit par une incertitude sur la période mesurée et par une fluctuation constante autour d'une valeur moyenne. Afin d'éliminer ce défaut, on effectue à l'étape 43 une moyenne exponentielle (filtrage numérique du premier ordre):

$$T_{n+1} = \frac{t_{n+1}}{K} + (1 - \frac{1}{K})T_n$$

où

$T_{n+1}$ est la nouvelle période Doppler calculée,
$t_{n+1}$ est la période Doppler issue du filtrage médian,
$T_n$ est l'ancienne période Doppler calculée,
K est la constante de temps de ce filtre.

Avec une valeur pour K égale à 6, la valeur calculée est relativement stable et le retard entre la vitesse réelle et la vitesse mesurée pour un échelon autour de 10 km/h est inférieure à une seconde.

A l'issu de ces deux filtrages, on obtient une période Doppler à laquelle on doit faire subir une correction en température, afin d'en déduire la vitesse réelle Vd d'avancement du véhicule. Pour ce faire, l'étape 44 ramène au programme principal où, à l'étape 32, on lit la valeur de la température ambiante Tp sur le convertisseur analogique/numérique 18. A l'étape suivante 33, on effectue la correction en température conformément à l'expression:

$$T_{corrigée} = T_{n+1}(1 - \frac{Tp}{500})$$

dans laquelle

—$T_{n+1}$ est la période Doppler filtrée calculée à l'étape 43,
—Tp est la température ambiante.

Cette expression matéralise le fait que la vitesse de propagation des ultrasons varie de 1% tous les 5°C.

A l'étape 34, on recrée un signal de fréquence double du signal Doppler filtré et corrigé en température par commande du circuit de temporisation 17 comme indiqué précédemment.

On calcule ensuite à l'étape 35 la vitesse réelle d'avancement du véhicule par rapport au sol. Sachant que la fréquence Doppler et

$$fd = 2\frac{Vd}{C}fe \sin \varphi$$

où

Vd est la vitesse du véhicule mesurée par effet Doppler,
C est la célérité du son,
$\varphi$ est l'angle d'inclinaison des cornets de directivité,
fe este la fréquence d'émission,
on a:

$$Vd = \frac{fd \times C}{2fe \cdot \sin \varphi}$$

soit

$$Vd = \frac{C}{2 \cdot Td \cdot fe \cdot \sin \varphi}$$

On affiche ensuite la vitesse calculée du véhicule Vd (étape 36), puis on calcule le patinage à l'étape suivante. La valeur PAT ayant été leu précédemment dans le compteur 172 lors d'une interruption générée par ce dernier, puis mémorisée, le microprocesseur 13 effectue simplement de calcul 100—PAT (étape 37) puis affiche la valeur du patinage ainsi obtenue (étape 38).

Le programme principal reste ensuite en phase d'attente jusqu'à l'apparition d'une nouvelle interruption IRQ qui initialise le déroulement du programme d'interruption suivant l'une des branches B1, B2 ou B3.

On constate que, par un traitement adéquat, il est possible d'utiliser le signal Doppler malgré les fluctuations en amplitude et en fréquence qu'il présente.

On notera d'autre part que, dans l'exemple décrit, le patinage n'est pas calculé par programme afin de ne pas augmenter le temps de calcul: le circuit de temporisation programmable 17 est commandé par le microprocesseur 13 pour recréer une fréquence double de la fréquence Doppler filtrée et assure alors une comparaison entre la vitesse réelle du véhicule et la vitesse des roues. De cette façon, les informations vitesse réelle et patinage sont aussi voisines que possible de la réalité pendant les états transitoires. Cependant, en variante, ce calcul peut être effectué directement par programme dans le microprocesseur sans sortir du cadre de l'invention.

## Revendications

1. Procédé de mesure par effet Doppler de la vitesse d'avancement d'un véhicule par rapport au sol suivant lequel on émet du véhicule vers le sol un signal sinusoïdal ultrasonore, on détecte le signal réfléchi du sol vers le véhicule, on engendre un signal produit obtenu par la multiplication du signal électrique utilisé pour engendrer ledit signal ultrasonore et du signal détecté et on filtre ledit signal produit pour en extraire la fréquence fondamentale constituant un signal Doppler représentatif de la vitesse d'avancement du véhicule par rapport au sol, caractérisé en ce qu'on effectue en outre successivement un filtrage médian en éliminant les deux valeurs extrêmes d'une série de trois valeurs de la période du signal Doppler prises consécutivement dans le temps, et une moyenne exponentielle par un filtrage numérique du premier ordre de la forme:

$$T_{n+1} = \frac{t_{n+1}}{K} + (1 - \frac{1}{K})T_n$$

où

—$T_{n+1}$ est la nouvelle période calculée du signal Doppler,

—$t_{n+1}$ est la période du signal Doppler issu du filtrage médian,

—$T_n$ est la période du signal Doppler calculée précédemment,

—K est une constante de temps de filtrage.

2. Procédé suivant la revendication 1, caractérisé en ce qu'on effectue en outre sur le signal Doppler filtré une correction en fonction de la température de l'air ambiant.

3. Procédé suivant la revendication 2, caractérisé en ce que ladite correction en fonction de la température est de la forme:

$$T_{corrigée} = T_{n+1}(1 - \frac{Tp}{500})$$

où

—Tp est la valeur de la température ambiante,

—$T_{n+1}$ est la période du signal Doppler filtré,

—$T_{corrigée}$ est la valeur corrigée en fonction de la température de la période du signal Doppler filtré.

4. Dispositif pour la mise en oeuvre du procédé suivant l'une quelconque des revendications 1 à 3 comprenant, à bord du véhicule, un générateur (163) de signal ultrasonore connecté à des moyens (6, 4) d'émission d'un signal sinusoidal ultrasonore vers le sol, des moyens de réception (5) et d'amplification (7) du signal réfléchi du sol vers le véhicule, des moyens de détection (3) engendrant un signal produit obtenu par la multiplication du signal appliqué auxdits moyens d'émission et du signal détecté et des moyens de filtrage (8) pour extraire le signal Doppler dudit signal produit, caractérisé en ce qu'il comprend en outre un capteur de température de l'air ambiant (11) et un circuit logique de traitement (1) comportant un microprocesseur (13) assurant:

1) le filtrage médian en éliminant les deux valeurs extrêmes d'une série de trois valeurs de la période du signal Doppler prises consécutivement dans le temps,

2) le calcul d'une moyenne exponentielle par un filtrage numérique du premier ordre de la forme:

$$T_{n+1} = \frac{t_{n+1}}{K} + (1 - \frac{1}{K})T_n$$

où

—$T_{n+1}$ est la nouvelle période calculée du signal Doppler,

—$t_{n+1}$ est la période du signal Doppler issu du filtrage médian,

—$T_n$ est la période du signal Doppler calculée précédemment,

—K est une constante de temps de filtrage, et

3) la correction en température du signal Doppler en fonction du signal de sortie du capteur de température.

5. Dispositif selon la revendication 4, caractérisé en ce que le circuit logique de traitement (1) comporte un premier circuit de temporisation (16) programmable comprenant un premier compteur (163) constituant ledit générateur du signal ultrasonore et un second compteur (162) recevant le signal ultrasonore et le signal Doppler et dont le contenu, représentatif de la période (T) du signal Doppler, est lu par le microprocesseur (13) à chaque front descendant du signal Doppler.

6. Dispositif selon la revendication 5, caractérisé en ce que le circuit logique de traitement (1) comprend un module (2) d'affichage de la vitesse d'avancement du véhicule et le premier circuit de temporisation (16) comporte un troisième compteur (161) recevant le signal Doppler et le signal ultrasonore et commandant la remise à zéro de l'affichage par le microprocesseur (13) lorsque la fréquence du signal Doppler reste inférieure à une valeur donnée.

7. Dispositif selon la revendication 6, caractérisé en ce qu'il comprend des moyens (9, 10) de mesure de la vitesse (Vr) des roues du véhicule et un second circuit de temporisation (17) pour la mesure du patinage des roues du véhicule comportant un premier compteur (173) commandé par le microprocesseur (13) pour engendrer un signal de fréquence multiple de la fréquence du signal Doppler filtré et corrigé en température, un deuxième compteur (171) recevant le signal de vitesse roue (Vr) et générant un signal dont la fréquence est une fraction de celle du signal de vitesse roue (Vr), et un troisième compteur (162) recevant les signaux émis par les premier et second compteurs et dont le contenu (PAT) lu périodiquement par le microprocesseur (13) est égal à une constante près au patinage des roues du véhicule.

**Patentansprüche**

1. Verfahren zur Messung mittels Doppler-Effekt der Fahrgeschwindigkeit eines Fahrzeugs relativ zum Boden, wobei ein sinusförmiges Ultraschallsignal vom Fahrzeug aus in Richtung Boden ausgesandt wird, das vom Boden zum Fahrzeug hin reflektierte Signal empfangen wird, ein Signal erzeugt wird durch Multiplikation des elektrischen Signals, das zur Erzeugung des Ultraschallsignals verwendet wird mit dem empfangenen Signal, das so erhaltene Signal gefiltert wird, um daraus die Grundfrequenz zu erhalten, die ein Doppler-Signal entsprechend der Fahrgeschwindigkeit des Fahrzeugs relativ zum Boden darstellt, dadurch gekennzeichnet, daß außerdem aufeinanderfolgend eine mittlere Filterung durchgeführt wird, bei der die beiden Extremwerte einer Reihe von drei zeitlich aufeinander folgenden Werten der Periode des Doppler-Signals eliminiert werden, sowie ein exponentieller Mittelwert ermittelt wird durch numerische Filterung der ersten Ordnung der Form:

$$T_{n+1} = \frac{t_{n+1}}{K} + (1 - \frac{1}{K})T_n$$

wobei

—$T_{n+1}$ die neue bereichnete Periode des Doppler-Signals ist,

—$t_{n+1}$ die Periode des aus der mittleren Filterung hervorgegangenen Doppler-Signals ist,

—$T_n$ die Periode des vorher berechneten Doppler-Signals ist und

—$K$ eine Zeitkonstante der Filterung ist.

2. Verfahren nach Anspruch 1, dadurch gekennzeichnet, daß außerdem das gefilterte Doppler-Signal als Funktion der Temperatur der Umgebungsluft korrigiert wird.

3. Verfahren nach Anspruch 2, dadurch gekennzeichnet, daß die Korrektur als Funktion der Temperatur von der folgenden Form ist:

$$T_{corrigée} = T_{n+1}(1 - \frac{Tp}{500})$$

wobei

—$Tp$ der Wert der Umgebungstemperatur ist,

—$T_{n+1}$ die Periode des gefilterten Doppler-Signals ist und

—$T_{corrigée}$ der als Funktion der Temperatur der Periode des gefilterten Doppler Signals korrigierte Wert ist.

4. Vorrichtung zur Durchführung des Verfahrens nach einem der Ansprüche 1 bis 3, wobei an Bord des Fahrzeugs ein Generator (163) für das Ultraschallsignal vorgesehen ist, der mit einer Anordnung (6, 4) zur Aussendung eines sinusförmigen Ultraschallsignals in Richtung zum Boden hin verbunden ist, eine Empfangsanordnung (5) und eine Verstärkeranordnung (7) für das vom Boden in Richtung zum Fahrzeug hin reflektierte Signal vorgesehen ist, eine Feststellanordnung (3) vorgesehen ist, welche ein Signal erzeugt, das durch Multiplikation des der Aussendeanordnung zugeführten Signals mit dem festgestellten Signal entsteht sowie eine Filteranordnung (8) aufweist, um das Doppler-Signal aus dem erzeugten Signal zu erhalten, dadurch gekennzeichnet, daß sie außerdem einen Temperaturfühler für die Umgebungsluft (11) aufweist sowie einen logischen Verarbeitungsschaltkreis (1) mit einem Mikroprozessor (13) zur Durchführung von:

1) der mittleren Filterung, wobei die beiden Extremwerte eine Reihe von drei zeitlich aufeinander folgenden Werten der Periode des Doppler-Signals eliminiert werden

2) der Berechnung eines exponentiellen Mittelwerts durch eine numerische Filterung der ersten Ordnung der Form:

$$T_{n+1} = \frac{t_{n+1}}{K} + (1 - \frac{1}{K})T_n$$

wobei

—$T_{n+1}$ die neue berechnete Periode des Doppler-Signals ist,

—$t_{n+1}$ die Periode des aus der mittleren Filterung hervorgegangenen Doppler-Signals ist,

—$T_n$ die Periode des vorher berechneten Doppler-Signals ist,

—$K$ eine Zeitkonstante der Filterung ist und

3) der Temperaturkorrektur des Doppler-Signals als Funktion des Ausgangssignals des Temperaturfühlers.

5. Vorrichtung nach Anspruch 4, dadurch gekennzeichnet, daß der logische Verarbeitungsschaltkreis (1) einen ersten programmierbaren Verzögerungskreis (16) aufweist mit einem ersten Zähler (163), welcher den Ultraschallgenerator darstellt und einen zweiten Zähler (162) aufweist, dem das Ultraschallsignal und das Doppler-Signal zugeführt werden und dessen Inhalt, der der Periode (T) des Doppler-Signals entspricht, vom Mikroprozessor (13) bei jeder Abstiegsflanke des Doppler-Signals ausgelesen wird.

6. Vorrichtung nach Anspruch 5, dadurch gekennzeichnet, dß der logische Verarbeitungsschaltkreis (1) ein Anzeigemodul (2) für die Fahrgeschwindigkeit des Fahrzeugs aufweist und daß der erste Verzögerungskreis (16) einen dritten Zähler (161) aufweist, dem das Doppler-Signal zugeführt wird sowie das Ultraschallsignal und der die Rückstellung auf Null der Anzeige mittels des Mikroprozessors (3) bewirkt, wenn die Frequenz des Doppler-Signals kleiner als ein vorgegebener Wert ist.

7. Vorrichtung nach Anspruch 6, dadurch gekennzeichnet, daß die eine Anordnung (9, 10) zur Messung der Radgeschwindigkeit (Vr) des Fahrzeugs aufweist, sowie eine zweiten Verzögerungskreis (17) zur Messung des Radschlupfes aufweist, mit einem ersten Zähler (173), der vom Mikroprozessor (13) gesteuert wird um ein Signal zu erzeugen, dessen Frequenz ein Vielfaches der Frequenz des gefilterten und temperaturkorrigierten Doppler-Signals ist, einen zweiten Zähler (171) aufweist, dem das Signal für die Radgeschwindigkeit (Vr) zugeführt wird und der ein Signal erzeugt, dessen Frequenz ein Bruchteil derjenigen des Signals der Radgeschwindigkeit (Vr) ist und einen dritten Zähler (162) aufweist, dem die von dem ersten und dem zweiten Zähler abgegebenen Signale zugeführt werden und dessen Inhalt (PAT), der periodisch vom Mikroprozessor (13) ausgelesen wird, gleich einer Konstanten für den Radschlupf des Fahrzeugs ist.

## Claims

1. A process for measuring the speed of forward movement of a vehicle with respect to the ground by means of the Doppler effect comprising emitting an ultrasonic sinusoidal signal from the vehicle towards the ground, detecting the signal reflected from the ground towards the vehicle, generating a product signal obtained by multiplication of the electrical signal used to generate said ultrasonic signal and the detected signal, and filtering said product signal to extract therefrom the fundamental frequency constituting a Doppler signal representative of the speed of forward movement of the vehicle with respect to the ground, characterised by further successively effecting central filtering by eliminating the two limit values of a series of three values of the period of the Doppler signal which are taken consecutively in respect of time, and an exponential mean by digital first order filtering in the following form:

$$T_{n+1}=\frac{t_{n+1}}{K}+(1-\frac{1}{K})T_n$$

in which:

—$T_{n+1}$ is the new calculated period of the Doppler signal,

—$t_{n+1}$ is the period of the Doppler signal issuing from the central filtering operation,

—$T_n$ is the period of the Doppler signal which was calculated previously, and

—K is a filtering time constant.

2. A process according to Claim 1, characterised by further effecting a correction in dependence on the temperature of the ambient air, on the filtered Doppler signal.

3. A process according to Claim 2, characterised in that said correction in dependence on temperature is in the following form:

$$T_{corrected}=T_{n+1}(1-\frac{Tp}{500})$$

in which:

—Tp is the value of the ambient temperature,

—$T_{n+1}$ is the period of the filtered Doppler signal, and

—$T_{corrected}$ is the value which is corrected in dependence on temperature of the period of the filtered Doppler signal.

4. Apparatus for carrying out the process according to any one of Claims 1 to 3 comprising, on board the vehicle, an ultrasonic signal generator (163) connected to means (6, 4) for emission of an ultrasonic sinusoidal signal towards the ground, means for receiving (5) and amplifying (7) the signal reflected from the ground towards the vehicle, detection means (3) for generating a product signal obtained by multiplication of the signal applied to said emission means and the detected signal and filtering means (8) for extracting the Doppler signal from said product signal, characterised in that it further comprises an ambient air temperature sensor (11) and a logic processing circuit (1) comprising a microprocessor (13) for effecting:

1) central filtering by eliminating the two limit values of a series of three values of the period of the Doppler signal which are taken consecutively in respect of time,

2) calculation of an exponential mean by digital first order filtering in the following form:

$$T_{n+1}=\frac{t_{n+1}}{K}+(1-\frac{1}{K})T_n$$

in which:

—$T_{n+1}$ is the new calculated period of the Doppler signal,

—$t_{n+1}$ is the period of the Doppler signal issuing from the central filtering operation,

—$T_n$ is the period of the Doppler signal which was calculated previously, and

—K is a filtering time constant, and

3) correction in respect of temperature of the Doppler signal in dependence on the output signal of the temperature sensor.

5. Apparatus according to Claim 4 characterised in that the logic processing circuit (1) comprises a first programmable timing circuit (16) comprising a first counter (163) forming said ultrasonic signal generator and a second counter (162) for receiving the ultrasonic signal and the Doppler signal and the content of which, which is representative of the period (T) of the Doppler signal, is read by the microprocessor (13) at each falling edge of the Doppler signal.

6. Apparatus according to Claim 5 characterised in that the logic processing circuit (1) comprises a module (2) for displaying the speed of forward movement of the vehicle and the first timing circuit (16) comprises a third counter (161) for receiving the Doppler signal and the ultrasonic signal and controlling resetting to zero of the display by the microprocessor (13) when the frequency of the Doppler signal remains lower than a given value.

7. Apparatus according to Claim 6 characterised in that it comprises means (9, 10) for measuring the speed (Vr) of the wheels of the vehicle and a second timing circuit (17) for measuring the slip of the wheels of the vehicle comprising a first counter (173) controlled by the microprocessor (13) to generate a signal of a frequency which is a multiple of the frequency of the Doppler signal which has been filtered and corrected in respect of temperature, a second counter (171) for receiving the wheel speed signal (Vr) and generating a signal, the frequency of which is a fraction of that of the wheel speed signal (Vr), and a third counter (162) for receiving the signals emitted by the first and second counters and the content (PAT) of which, which is periodically read by the microprocessor (13), is equal to within a constant to slip of the wheels of the vehicle.

FIG.1

AFFICHAGE VIT. RÉELLE ET PATINAGE

CIRCUIT LOGIQUE DE TRAITEMENT

FILTRAGE

DÉTECTION

AMPLIFICATION

AMPLIFICATION

MISE EN FORME

MISE EN FORME

FIG. 2

FIG.3

30 — 

31 — INITIALISATION

32 — LECTURE TEMPÉRATURE $T_P$

33 — CORRECTION EN TEMPÉRATURE $T_{corrigée} = T(1 - \frac{T_P}{500})$

34 — RECRÉATION DU SIGNAL DOPPLER FILTRE

35 — CALCUL VITESSE $V_d$

36 — AFFICHAGE VITESSE $V_d$

37 — CALCUL PATINAGE $(100 - PAT)$

38 — AFFICHAGE PATINAGE

39 — ATTENTE D'INTERRUPTION

FIG.4

IRQ

B1

B2

B3

40 — LECTURE DE LA PÉRIODE DOPPLER

41 — RÉNITIALISATION COMPTEUR DE PÉRIODE DOPPLER

42 — FILTRAGE MÉDIAN SUR TROIS VALEURS

43 — MOYENNE EXPONENTIELLE $T_{n+1} = T_n + \frac{t_{n+1} - T_n}{K}$

LECTURE PAT

AFFICHAGE 00

RETOUR